# EUROPEAN PATENT APPLICATION

(11) **EP 2 283 906 A1**
(43) Date of publication of application: **16.02.2011**
(21) Application number: 09015961.7
(22) Date of filing: 23.12.2009
(51) Int. Cl.: B01D 27/08, B01D 29/21, B01D 36/00

(54) **Two stage filter cartridge**

(30) Priority: 24.07.2009 US 460788
(71) Applicant: Stanadyne Corporation, Windsor, Connecticut 06095 (US)
(72) Inventor: Sasur, Timothy M., Newington, Connecticut 06111 (US)
(74) Representative: Glawe, Delfs, Moll

(57) **Abstract**

A fuel filter cartridge includes an upper enclosure and a lower enclosure. The upper enclosure includes an upper section having a cavity for receiving a fuel flow, and a lower section joined to the upper section. A primary filter element is disposed within the lower section. The primary filter element and the lower section define a primary inlet plenum in fluid communication with the upper section cavity and a primary outlet plenum. A secondary filter element is disposed within the lower enclosure. The secondary filter element and the lower enclosure define a secondary inlet plenum in fluid communication with the primary outlet plenum and a secondary outlet plenum for discharging the fuel flow from the filter cartridge. The lower enclosure defines first and second passages in fluid communications with the primary and secondary inlet plenums, respectively, and includes a drain-cock movable between open and closed positions to open or close the first and second passages.

## Description

### Background

This invention relates generally to devices for filtering and separating liquids. More particularly, the present invention relates to fuel filters for removing foreign particles and separating water from fuel of the fuel supply system of an internal combustion engine.

The absence of high standards of quality control in diesel fuel supplies dictates that an effective fuel filter be incorporated into the fuel supply system for a diesel engine. It is not uncommon for diesel fuel to have significant quantities of abrasive particles and water. The abrasive particles present the potential for permanent damage to components of the fuel injection pump. The abrasive particles can also adversely effect the performance of the pump by destroying the ability of the fuel injection pump to precisely meter and deliver fuel at high pressures. The presence of water in the diesel fuel supply can cause rusting of engine components, and during freezing conditions, can result in interruption of the fuel injection system and/or seizure of moving components.

A number of conventional fuel filters perform the dual function of removing particulate material from the diesel fuel and separating water from the fuel. Commonly, the fuel filters employ a disposable filter cartridge which is replaced at pre-established intervals of filter usage.

U.S. Pat No. 4.976.852 assigned to the assignee of the present invention, discloses a fuel conditioner to which the present invention relates. A disposable filter/water separator cartridge is releasably secured to a base. A two stage filter assembly within the cartridge includes a primary filter element that removes particulate matter and introduces coalescing media into the fuel flow and a secondary filter element that removes particulate matter and functions as a water barrier, whereby water entrained in the fuel flow is trapped in the coalescing chamber disposed between the two filter elements.

Filtration and water separation can be carried out by a single layer of filter media typically composed of cellulose and glass fibers blended with resins and additives. The glass fibers are naturally hydrophilic, attracting water and causing the water to coalesce from the emulsion into droplets. Water droplets collide and form larger droplets on the surface of the media. Once droplet size is large enough to overcome the inertial forces of the fluid flow and viscosity, the water falls to the bottom of the filter cartridge housing due to gravity and the relative density difference of the fuel and water.

The cellulose fibers are the basic filtration material, trapping particulate matter carried in the fuel. The cellulose fibers create a pore structure and provide strength to the media. The primary filtration is done on the surface of the media, with limited filtration through its depth. Resins formed of heavier molecular weight of oxidized fuel and asphaltenes coat the fibers while hard particulates become entrained in the pores as the fuel flows through the media.

### Summary

There is provided a fuel filter cartridge comprising an upper enclosure and a lower enclosure. The upper enclosure includes an upper section having a cavity for receiving a fuel flow, and a lower section joined to the upper section. A primary filter element is disposed within the lower section. The primary filter element and the lower section define a primary inlet plenum in fluid communication with the upper section cavity and a primary outlet plenum. A secondary filter element is disposed within the lower enclosure. The secondary filter element and the lower enclosure define a secondary inlet plenum in fluid communication with the primary outlet plenum and a secondary outlet plenum for discharging the fuel flow from the filter cartridge. The lower enclosure defines first and second passages in fluid communications with the primary and secondary inlet plenums, respectively, and includes a drain-cock movable between open and closed positions to open or close the first and second passages.

The lower section includes vertically extending inner and outer cylinders, with the primary filter element disposed intermediate the inner and outer cylinders. An outer surface of the primary filter element and an inner surface of the outer cylinder form the primary inlet plenum. An inner surface of the primary filter element and an outer surface of the inner cylinder form the primary outlet plenum.

The inner cylinder defines a chamber in fluid communication with the secondary outlet plenum.

The lower enclosure includes a bottom floor and inner and outer walls that extend upwardly from the floor.

The secondary filter element is disposed within the inner wall, with an inner surface of the inner wall and an outer surface of the secondary filter element forming the secondary inlet plenum.

The inner and outer wall form a first sump in fluid communication with primary inlet plenum and the first passage.

A bottom surface of the secondary filter element and the floor form a second sump in fluid communication with the secondary inlet plenum and the second passage.

The lower enclosure is removably mounted to the upper enclosure by a threaded connection between the inner wall and a cylindrical skirt that extends downwardly from the lower section of the upper enclosure. A sealing device is disposed intermediate a shoulder of the outer wall and a lower surface of the lower section of the upper enclosure.

### Brief Description of the Drawings

The present disclosure may be better understood and its numerous objects and advantages will become apparent to those skilled in the art by reference to the accompanying drawings in which:

Figure 1 is a sectional view of a fuel filter assembly in accordance with the disclosure;

Figure 2 is an enlarged fragmentary sectional view, partly in schematic, of the fuel filter assembly of Figure 1;

Figure 3 is a partial cut away view of a primary filter media;

Figure 4 is a partial cut away view of a first embodiment of a secondary filter media;

Figure 5 is a partial cut away view of a second embodiment of a secondary filter media;

### Detailed Description

With reference to the drawings wherein like numerals represent like parts throughout the several figures, a fuel filter assembly in accordance with the present disclosure is generally designated by the numeral 10. Fuel filter assembly 10 comprises a base 12 and a disposable filter cartridge 14. The base 12 is disposed generally above the disposable filter cartridge 14 which is locked to the base 12 by means of a retainer collar (not shown). The fuel filter assembly 10 is especially adapted for incorporation into the fuel supply system of an internal combustion engine (not illustrated), such as a diesel engine, for removing particulate matter from fuel and separating the water from the fuel.

The base 12 and the disposable cartridge 14 may assume a wide variety of configurations. For the disclosed embodiment, the base 12 is an inverted cup-like receptacle which forms a skirt 16 defining a lower receiving cavity for upper portions of the disposable cartridge 14. An elongated sleeve-like inner conduit 18 and an outer concentric sleeve-like conduit 20 extend axially downward from the center of the base 12. The conduits provide generally coaxial fluid communication between the base and the disposable cartridge. An inlet connector (not illustrated) located at an upper side location of the base connects with the fuel line to provide fluid communication through the conduit 20, an upper chamber 21 of the filter cartridge, and an interior passageway 22. An outlet connector (not illustrated) at an upper-side location of the base connects with the fuel line to provide external fluid communication from conduit 18.

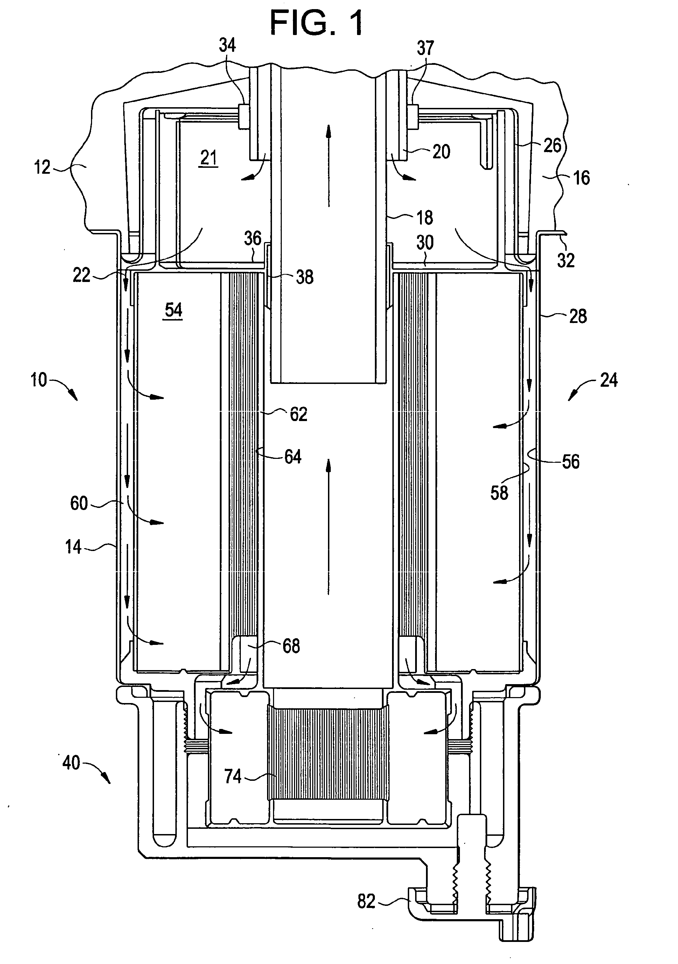

With reference to Figure 1, the disposable filter cartridge comprises a can-like upper enclosure 24 formed by a pair of opposed upper and lower sections 26, 28. A medial plate 30 is disposed between the upper and lower sections 26, 28. The sections 26, 28 are joined along a circumferential roll seam 32. The upper section 26 which is smaller in diameter than the lower section 28, is received by the base receptacle. The upper section 26 is dimensioned to be closely accommodated in the base receptacle. Central axial openings 34, 36 in the upper section 26 and the medial plate 30 are dimensioned to receive the second and first conduits 20, 18, respectively. A sealing grommet 37 mounted at the opening 34 in the upper section 26 diametrically fluidically seals against outer conduit 20. A sealing grommet 38 mounted at the opening 36 in the medial plate 30 diametrically fluidically seals against inner conduit 18.

A cup-like lower enclosure 40 is disposed below the lower section 28. Cylindrical, inner and outer walls 42, 44 extend upwardly from the floor 46 of the lower enclosure 40. The inner wall 42 is removably connected to a cylindrical skirt 48 that extends downwardly from the lower section 28, for example by a threaded connection 49, to mount the lower enclosure 40 to the upper enclosure 24. An O-ring, or similar sealing device 50, disposed on a shoulder 52 at the top of the outer wall 44, and the connection 49 between inner wall 42 and skirt 48 seal the lower enclosure 40 to the upper enclosure 24.

The filter cartridge 14 employs a dual stage assembly. A primary filter element 54 having a continuous fan-like configuration engages the underside of the medial plate 30 and extends downwardly substantially through the length of the lower section 28. The inner surface 56 of the lower section 28 and the outer surface 58 of the primary filter element media create an inlet plenum 60 for the primary filter element 54. Interior passageways 22 in the medial plate 30 provide fluid communication between upper chamber 21 and the inlet plenum 60. The inner surface 62 of the primary filter element media and the outer surface 64 of an inner cylinder 66 of the primary filter element 54 create an outlet plenum 68 for the primary filter element 54. Outlet passages 70, 72 at the bottom of the inlet and outlet plenums 60, 68 provide fluid communication between the upper and lower enclosures 24, 40.

A secondary filter element 74 which also has a continuous fan-shaped pleated configuration is disposed within skirt 48. An annular inlet plenum 76 for the secondary filter element 74 is in fluid communication with outlet plenum 68 through outlet passage 72. The annular cavity 78 formed between the inner and outer walls 42, 44 of the lower enclosure 40 is in fluid communication with inlet plenum 60 through outlet passage 70. The cavity 78 forms a sump to collect water which coalesces from the fuel entering the primary filter element 54. A second sump 80 is formed below the secondary filter element 74 to collectwater which coalesces from the fuel between the primary and secondary filter elements 54, 74. A drain-cock 82 disposed in the lower enclosure 40 drains the water from both sumps 78, 80 through passages 79, 81, respectively.

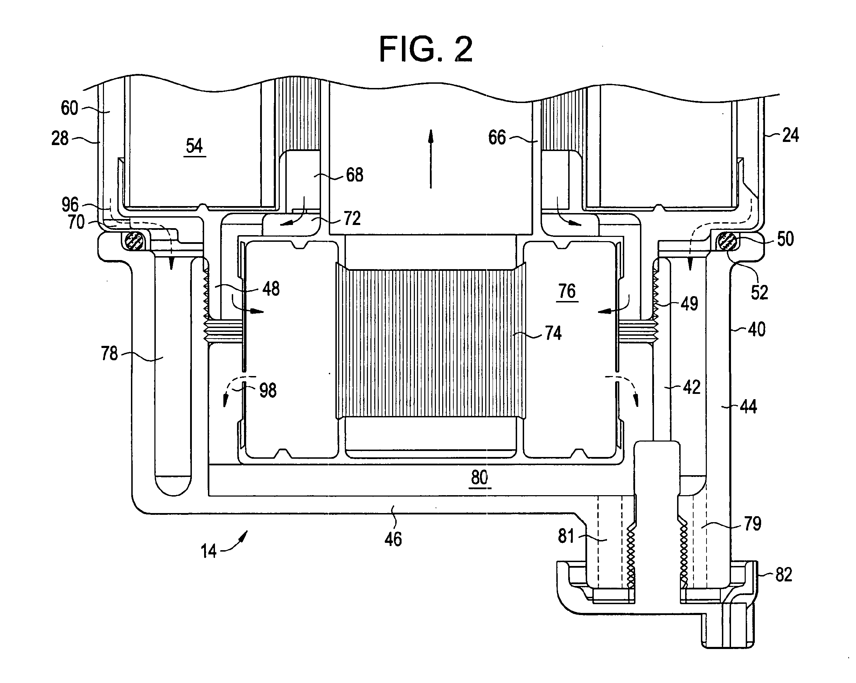

The general flow path of the fuel through the filter cartridge 14 is generally designated by the solid arrows in Figures 1 and 2. It will be appreciated that the fuel initially traverses axially down inlet plenum 60 and generally radially inward through the primary filter element 54. The circulation path extends axially downwardly through outlet plenum 68, outlet passage 72, axially downward into inlet plenum 76, and then generally radially inward through the secondary filter element 74 into the cavity created by inner cylinder 66 with the fuel exiting the filter cartridge 14 through the conduit 22.

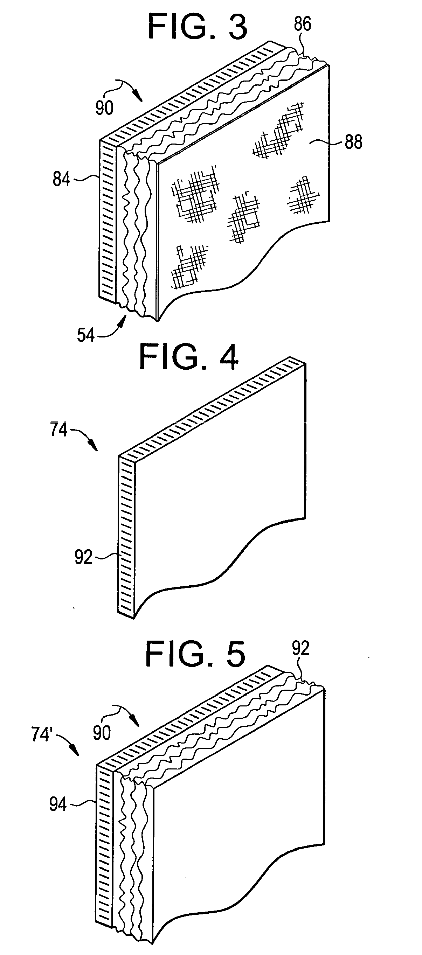

The two filter elements 54, 74 may have the structure disclosed in U.S. Patent Application Serial No. 11/540,041, filed 09/29/2006, assigned to the assignee of the subject filter cartridge, and hereby incorporated by reference. With reference to Figure 3, such filter elements may be composed of multiple layers of material, primary filter element 54, or a single layer of material, secondary filter element 74.

For example, the primary filter element 54 may include a filter media layer 84, a coalescing media layer 86 and a scrim layer 88. The first layer in the flow direction 90, the filter media layer 84, is dedicated to filtration and allows entrained water to pass through. The most economical choice for the dedicated filtration layer 84 is a cellulose media, with minimal amounts of synthetic fibers, resins and treatments. The structure of such a cellulose layer can be accurately controlled to provide maximum open area for filtration. The coalescing media layer 86 may be composed of spunbonded or melt blown synthetic fibers that provide a porous network configured to coalesce water from the filtered fuel. This layer is formed of near continuous thermoplastic polymer fibers combined into self-bonded webs using melt-blowing or spun-bonding processes. The scrim layer 88 is a relatively thin layer that may be added to protect the structure during manufacturing and handling.

With reference to Figure 4, the '041 application also discloses a filter material for use as the secondary filter element 74. This filter material includes a water barrier layer 92. The hydrophobic material comprising the water barrier layer 92 may be treated cellulose or synthetic material, or naturally hydrophobic materials such as polyolefins such as polypropylene or fluoropolymers like Teflon. With reference to Figure 5, the secondary filter element 74' may also include a filtration/coalescing media layer 94.

In two-stage filter cartridges, a relatively larger amount of water coalesces from the fuel between the primary and secondary filter elements than before the primary filter element. In filter cartridges of the type taught by the '041 application, water separated from the fuel by both the primary and secondary filter element travels through a common pathway to collect in a single sump. The relatively large flow of water separated between the two filter elements retards the flow of water separated before the primary filter element, thereby maintaining a relatively high concentration of water in the fuel in the inlet plenum to the primary filter element. This water decreases the usable surface area of the primary filter element by blocking the lower portion of the primary filter element and thereby preventing the flow of fuel through this lower portion. The water also promotes bacterial growth in the fuel, which contributes to plugging the filter surface, and accelerates fuel degradation.

With reference to Figure 2, the subject filter cartridge 14 has a first water removal flow path 96 for water separated before the primary filter element 54 from inlet plenum 60 and a second water removal flow path 98 for water separated between the primary and secondary filter elements from inlet plenum 76. In addition, the subject filter cartridge 14 has separate sumps 78, 80 for receiving water from the first and second water removal flow paths 96, 98. Accordingly, the flow of water through the second water removal flow path 98 to sump 80 does not impede the flow of water through the first water removal flow path 96 to sump 78. The seal formed by the connection 49 between inner wall 42 and skirt 48 prevents the fuel flow from bypassing the primary filter element 54 and prevents interaction between the first and second water removal flow paths 96, 98.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.

## Claims

1. A fuel filter assembly (10) comprising a filter cartridge (14), the filter cartridge including:
an upper enclosure (24);
a primary filter element (54) disposed within the upper enclosure, the primary filter element and the upper enclosure defining a primary inlet plenum (60) adapted to receive a fuel flow, the primary inlet plenum being in fluid communication with a primary outlet plenum (68);
a secondary filter element (74); and
a drain-cock (82);
**characterized by** the filter cartridge (14) further comprising:
a lower enclosure (40), the secondary filter element (74) being disposed within the lower enclosure, the secondary filter element and the lower enclosure defining a secondary inlet plenum (76) in fluid communication with the primary outlet plenum and a secondary outlet plenum (78); and
first and second water passageways in fluid communications with the primary and secondary inlet plenums, respectively;
wherein the drain-cock (82) is movable between open and closed positions to drain water from the first and second water passageways.

2. The fuel filter assembly of claim 1, **characterized in that** the lower section (28) includes vertically extending inner and outer cylinders, the primary filter element (54) being disposed intermediate the inner and outer cylinders, an outer surface (58) of the primary filter element and an inner surface (56) of the outer cylinder defining the primary inlet plenum (60), an inner surface (62) of the primary filter element and an outer surface (64) of the inner cylinder (66) defining the primary outlet plenum (68).

3. The fuel filter assembly of claim 2, **characterized in that** the inner cylinder (66) defines a chamber in fluid communication with the first conduit (18) and the secondary outlet plenum (78).

4. The fuel filter assembly of claim 1, **characterized in that** the lower enclosure (40) includes:
a bottom floor (46);
an inner wall (42) extending upwardly from the floor; and
an outer wall (44) extending upwardly from the floor.

5. The fuel filter assembly of claim 4, **characterized in that** the secondary filter element (74) is disposed within the inner wall (42), an inner surface of the inner wall and an outer surface of the secondary filter element defining the secondary inlet plenum (76).

6. The fuel filter assembly of claim 5, **characterized in that** the inner and outer walls (42, 44) define a first sump (78) in fluid communication with primary inlet plenum (60) and the floor (46) defines a first passage (79) in fluid communication with the first sump, the first sump and the first passage defining the first water passageway.

7. The fuel filter assembly of claim 6, **characterized in that** a bottom surface of the secondary filter element (74) and the floor (46) define a second sump (80) in fluid communication with the secondary inlet plenum (76) and the floor defines a second passage (81) in fluid communication with the second sump, the second sump and the second passage defining the second water passageway.

8. The fuel filter assembly of claim 4, **characterized in that** the inner wall (42) is connected to a cylindrical skirt (48) that extends downwardly from the upper enclosure (24).

9. The fuel filter assembly of claim 4, **characterized in that** the lower enclosure (40) is removably mounted to the upper enclosure (24) by a threaded connection (49) between a cylindrical skirt (48) that extends downwardly from the upper enclosure and the inner wall (42).

10. The fuel filter assembly of claim 9, **characterized in that** a sealing device (50) is disposed intermediate a shoulder (52) of the outer wall (44) and a lower surface of the upper enclosure (24).

11. The fuel filter assembly of claim 1, **characterized in that** it further includes:
a base (12) having a central first conduit (18) and a second conduit (20) surrounding the first conduct, the first conduit defining a fuel outlet passage and the second conduit defining a fuel inlet passage;
the filter cartridge upper enclosure (24) including
an upper section (26) having a opening (34) for receiving the second conduit (20),
a lower section (28) joined to the upper section, and
a medial plate (30) disposed between the upper and lower sections, the medial plate having an opening (36) for receiving the first conduit (18).

12. A fuel filter cartridge (14) comprising:
an upper enclosure (24) including an upper section (26) defining a cavity (21) adapted to receive a fuel flow;
a primary filter element (54) disposed within the upper enclosure; and
a secondary filter element (74);
**characterized by**
the upper enclosure (24) also including a lower section (28) joined to the upper section, the primary filter element (54) being disposed within the lower section, the primary filter element and the lower section defining a primary inlet plenum (60) in fluid communication with the upper section cavity and a primary outlet plenum (68); and
the filter cartridge (14) further comprising a lower enclosure (40), the secondary filter element (74) being disposed within the lower enclosure, the secondary filter element and the lower enclosure defining a secondary inlet plenum (76) in fluid communication with the primary outlet plenum and a secondary outlet plenum (78) adapted to discharge the fuel flow from the filter cartridge;
wherein the lower enclosure defines first and second passages in fluid communications with the primary and secondary inlet plenums, respectively, and includes a drain-cock (82) movable between open and closed positions to open or close the first and second passages.

13. The fuel filter cartridge of claim 12, **characterized in that** the lower section (28) includes vertically extending inner and outer cylinders, the primary filter element (54) being disposed intermediate the inner and outer cylinders, an outer surface (58) of the primary filter element and an inner surface (56) of the outer cylinder defining the primary inlet plenum (60), an inner surface (62) of the primary filter element and an outer surface (64) of the inner cylinder (66) defining the primary outlet plenum (68).

14. The fuel filter cartridge of claim 13, **characterized in that** the inner cylinder (66) defines a chamber in fluid communication with the secondary outlet plenum (78).

15. The fuel filter cartridge of claim 12, **characterized in that** the lower enclosure includes:
a bottom floor (46);
an inner wall (42) extending upwardly from the floor; and
an outer wall (44) extending upwardly from the floor.

16. The fuel filter cartridge of claim 15 wherein the secondary filter element (74) is disposed within the inner wall (42), an inner surface of the inner wall and an outer surface of the secondary filter element defining the secondary inlet plenum (76).

17. The fuel filter cartridge of claim 15, **characterized in that** the inner wall (42) is connected to a cylindrical skirt (48) that extends downwardly from the lower section (28) of the upper enclosure (24).

18. A fuel filter cartridge (14) comprising:
an upper enclosure (24) including an upper section (26) defining a cavity (21) adapted to receive a fuel flow;
a primary filter element (54) disposed within the upper enclosure;
a secondary filter element (74); and
a drain-cock (82);
**characterized by**:
the upper enclosure (24) also including a lower section (28) joined to the upper section (24), the lower section having vertically extending inner and outer cylinders, the inner cylinder defining a chamber adapted to discharge the fuel flow, the primary filter element (54) being disposed intermediate the inner and outer cylinders, an outer surface (58) of the primary filter element and an inner surface (56) of the outer cylinder defining a primary inlet plenum (60) in fluid communication with the upper section cavity, an inner surface (62) of the primary filter element and an outer surface (64) of the inner cylinder (66) defining a primary outlet plenum (68); and
the filter cartridge (14) further comprising a lower enclosure (40) including
a bottom floor (46) defining first and second passages (79, 81), the first passage being in fluid communication with the primary inlet passage,
an inner wall (42) extending upwardly from the floor, and
an outer wall (44) extending upwardly from the floor;
the secondary filter element (74) being disposed within the inner wall, an inner surface of the inner wall and an outer surface of the secondary filter element defining a secondary inlet plenum (76) in fluid communication with the primary outlet plenum and the second passage, an inner surface of the secondary filter element defining a secondary outlet plenum in fluid communication with the inner cylinder chamber; and
the drain-cock (82) being movable between open and closed positions to open or close the first and second passages.

19. The fuel filter cartridge of claim 16 or 18, **characterized in that** the inner and outer wall (42, 44) define a first sump (78) in fluid communication with primary inlet plenum (60) and the first passage (79).

20. The fuel filter cartridge of claim 17 or 18, **characterized in that** a bottom surface of the secondary filter element and the floor (46) define a second sump (80) in fluid communication with the secondary inlet plenum (76) and the second passage (81).

21. The fuel filter cartridge of claim 15 or 18, **characterized in that** wherein the lower enclosure (40) is removably mounted to the upper enclosure (24) by a threaded connection (49) between a cylindrical skirt (48) that extends downwardly from the lower section (28) of the upper enclosure and the inner wall (42).

22. The fuel filter cartridge of claim 21, **characterized in that** a sealing device (50) is disposed intermediate a shoulder (52) of the outer wall (44) and a lower surface of the lower section of the upper enclosure (24).
